# EUROPÄISCHE PATENTSCHRIFT

(11) **EP 2 905 243 B1**
(45) Veröffentlichungstag und Bekanntmachung des Hinweises auf die Patenterteilung: **13.03.2019**
(21) Anmeldenummer: 15000403.4
(22) Anmeldetag: 11.02.2015
(51) Int. Cl.: B65D 85/48, B65D 19/14, B65D 19/44

(54) **Vorrichtung zum Transport und/oder zur Lagerung von plattenförmigen Gegenständen**
Device for transport and/or storage of plate-like objects
Dispositif pour le transport et/ou le stockage des objets plats

(30) Priorität: 11.02.2014 DE 102014001735
(43) Veröffentlichungstag der Anmeldung: 12.08.2015
(73) Patentinhaber: Holzverpackungen Bachmann KG, 63863 Eschau-Hobbach (DE)
(72) Erfinder: Bachmann, Eberhard, 63863 Eschau-Hobbach (DE)
(74) Vertreter: Nitz, Astrid

(56) Entgegenhaltungen:
- WO-A1-2011/148189
- DE-U1-202008 011 823
- US-A1- 2011 155 726

## Beschreibung

Die Erfindung betrifft eine Vorrichtung zum Transport und/oder zur Lagerung von plattenförmigen Vorrichtungen nach dem Oberbegriff von Anspruch 1.

Bekannt sind Transportvorrichtungen für Solarpanelen, die zum Schutz der empfindlichen Panelen mit verschiedenen Schutzflächen und Dämpfungsmaterial ausgestattet sind.

Nachteilig ist dabei der komplizierte und teure Aufbau.

Aus der DE U 20 2008 011 823 ist eine Vorrichtung zum Transport von flächenhaften Solarpanelen bekannt, die einen Aufbau aus Leisten aufweist.

Aufgabe ist es, eine Vorrichtung bereitzustellen, die eine verbesserte Aufnahme von Panelen ermöglicht, und zugleich einfach aufgebaut ist.

Die Aufgabe wird gelöst durch eine Vorrichtung zum Transport und/oder zur Lagerung von zerbrechlichen, plattenförmigen Vorrichtungen, mit einem palettenartigen Unterbau, umfassend Holz, und einem Aufbau, umfassend Holzleisten, wobei der Aufbau entsprechend dem palettenartigen Unterbau Stirnseiten und Langseiten aufweist, wobei die Stirnseiten jeweils einen Leistenrahmen mit Querleisten, die insbesondere mit Nagelplatten an den Leistenrahmen angebracht sind, und eine Diagonalleiste umfassen, dadurch gekennzeichnet, dass eine mittige Querleiste eine Steigung aufweist, so dass sie im Wesentlichen mittig den Leistenrahmen quer in zwei Trapeze teilt, wobei das dem palettenartigen Unterbau nähere Trapez durch eine Diagonalleiste in zwei Dreiecke geteilt ist, und das dem palettenartigen Unterbau entferntere Trapez eine zur mittigen Querleiste im Wesentlichen parallele Querleiste aufweist, und wobei in einem Randbereich im Inneren der Vorrichtung sowohl auf den mittigen Querleisten als auch auf den dazu im Wesentlichen parallelen Querleisten der Stirnseiten jeweils eine Längsleiste im Wesentlichen parallel zu einer Längsrichtung des palettenartigen Unterbaus derart angebracht ist, dass eine eingestellte, an beide Längsleisten angelehnte plattenförmige Vorrichtung im Wesentlichen 90° zu den Querleisten ausgerichtet ist. Durch die genannten Leistenanordnungen ist einerseits ein schneller Aufbau möglich und die Vorrichtung ist leicht und zugleich stabil.

Vorteilhaft ist es, wenn im Inneren der Vorrichtung auf der mittigen Querleiste zwei Längsleisten in den Randbereichen angebracht sind.

Vorteilhaft ist es, wenn im Wesentlichen in einer Mitte der Langseite ein Leistenrahmen mit Querleisten parallel zu den Leistenrahmen an den Stirnseiten angeordnet ist.

Vorteilhaft ist es, wenn eine oder jeweils eine plattenförmige Vorrichtung an einer Längsleiste im Inneren der Vorrichtung angeordnet ist, wobei die plattenförmigen Vorrichtungen schräg angelehnt sind.

Vorteilhaft ist es, wenn an den Langseiten Langleisten vorgesehen sind, insbesondere in der Höhe der Querleisten.

Vorteilhaft ist es, wenn der Aufbau mit dem palettenartigen Unterbau verbunden ist.

Weitere Merkmale und Vorteile der Erfindung ergeben sich aus den Ansprüchen und der nachstehenden Beschreibung, in der Ausführungsbeispiele des Gegenstands der Erfindung in Verbindung mit den Zeichnungen näher erläutert sind.

Es zeigen:
- Fig. 1: eine Vorrichtung zum Transport und/oder Lagerung in perspektivischer Ansicht,
- Fig. 2: eine Ansicht einer Stirnseite einer Vorrichtung zum Transport und/oder Lagerung und
- Fig. 3: einen Schnitt durch eine Vorrichtung zum Transport und/oder Lagerung.

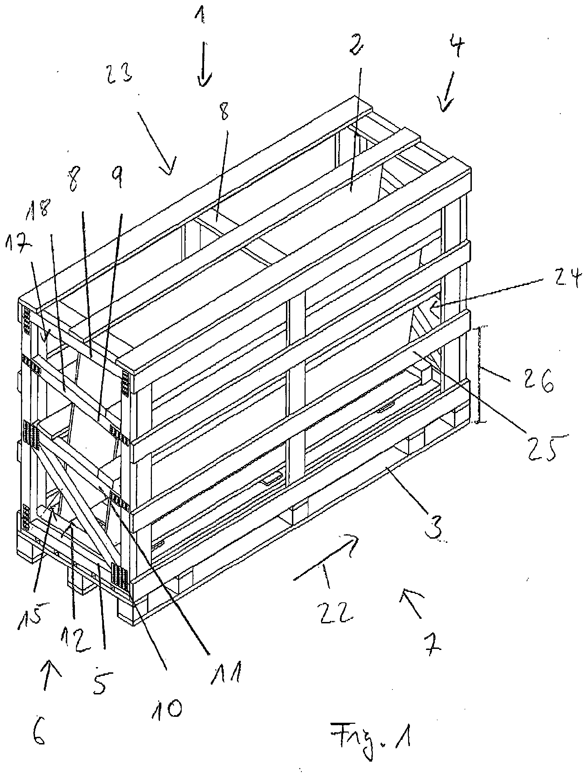

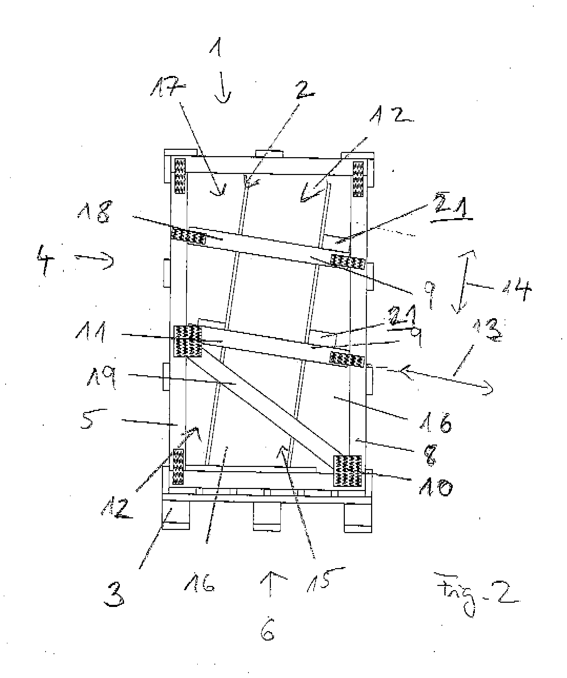

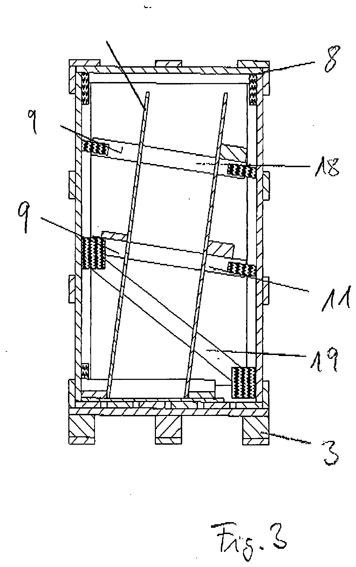

Fig. 1 zeigt eine Vorrichtung 1 zum Transport und/oder zur Lagerung von zerbrechlichen, plattenförmigen Vorrichtungen 2, insbesondere Solarpanelen, in perspektivischer Ansicht mit einem palettenartigen Unterbau 3, umfassend Holz, insbesondere einer Holzpalette, und einem Aufbau 4, umfassend Holzleisten 5, wobei der Aufbau 4 entsprechend dem palettenartigen Unterbau 3 schmalere Stirnseiten 6 und breitere Langseiten 7 aufweist. Die Stirnseite 6 umfasst einen Leistenrahmen 8 mit Querleisten 9, die insbesondere mit Nagelplatten 10 an den Leistenrahmen 8 angebracht sind, wobei eine mittige Querleiste 11 nahezu mittig den Leistenrahmen 8 quer in zwei Trapeze 12 teilt, wobei die Steigung 13 der mittigen Querleiste 11 ungefähr 90° zu einer Längsausrichtung 14 der eingestellten, zerbrechlichen, plattenartigen Vorrichtungen 2 ausgerichtet angeordnet ist, wie Fig. 2 zeigt, und das dem palettenartigen Unterbau 3 nähere Trapez 15 durch eine Diagonalleiste 19 in zwei Dreiecke 16 geteilt ist. Hierdurch ist einerseits ein leichtes Gestell gewährleistet, das andererseits eine optimale Kraftaufnahme durch die angepasste Steigung aufweist. Ein dem palettenartigen Unterbau 3 entfernteres Trapez 17 weist eine der mittigen Querleiste 11 im Wesentlichen parallele Querleiste 18 auf. Auf einer Querleiste 9 in einem Randbereich 20 im Inneren 24 der Vorrichtung 1 ist eine Längsleiste 21 angebracht, im Wesentlichen parallel zu einer Längsrichtung 22 des palettenartigen Unterbaus 3. An den Langseiten 7 sind in Längsrichtung 22 Langleisten 25 vorgesehen, insbesondere in der Höhe 26 der Querleisten 9. In der Mitte 23 ist ein weiterer Leistenrahmen 8 mit Querleisten angeordnet, wie Fig. 3 detaillierter zeigt.

Fig. 2 zeigt eine Ansicht einer Stirnseite 6 einer Vorrichtung 1 zum Transport und/oder zur Lagerung von plattenförmigen Vorrichtungen 2. Der Leistenrahmen 8 umfassend Holzleisten 5 ist durch die Querleisten 9 und die Diagonalleiste 19 in mehrere Trapeze 12 und/oder Dreiecke 16 geteilt. Die eingesetzten, zerbrechlichen, plattenförmigen Vorrichtungen 2 stehen in einem rechten Winkel angelehnt an die Längsleisten 21 zu den Querleisten 9.

Fig. 3 zeigt einen Schnitt durch eine Vorrichtung zum Transport und/oder zur Lagerung von plattenförmigen Vorrichtungen 2, wobei ein mittlerer Leistenrahmen 8 dargestellt ist, der im Inneren 24 der Vorrichtung angeordnet ist. Er weist ebenfalls Querleisten 9 und eine Diagonalleiste 19 auf.

### BEZUGSZEICHENLISTE

- 1: Vorrichtung zum Transport und/oder Lagerung
- 2: plattenförmige Vorrichtung
- 3: Unterbau
- 4: Aufbau
- 5: Holzleiste
- 6: Stirnseite
- 7: Langseite
- 8: Leistenrahmen
- 9: Querleiste
- 10: Nagelplatte
- 11: mittige Querleiste
- 12: Trapez
- 13: Steigung
- 14: Längsausrichtung
- 15: Trapez
- 16: Dreieck
- 17: entfernteres Trapez
- 18: Querleiste
- 19: Diagonalleiste
- 20: Randbereich
- 21: Längsleiste
- 22: Längsrichtung
- 23: Mitte
- 24: Inneres
- 25: Langleiste
- 26: Höhe

## Patentansprüche

1. Vorrichtung (1) zum Transport und/oder zur Lagerung von zerbrechlichen, plattenförmigen Vorrichtungen (2), mit einem palettenartigen Unterbau (3), umfassend Holz, und einem Aufbau (4), umfassend Holzleisten (5), wobei der Aufbau (4) entsprechend dem palettenartigen Unterbau (3) Stirnseiten (6) und Langseiten (7) aufweist, wobei die Stirnseiten (6) jeweils einen Leistenrahmen (8) mit Querleisten (9), die insbesondere mit Nagelplatten (10) an den Leistenrahmen (8) angebracht sind, und eine Diagonalleiste (19) umfassen, **dadurch gekennzeichnet, dass** eine mittige Querleiste (11) eine Steigung (13) aufweist, so dass sie im Wesentlichen mittig den Leistenrahmen (8) quer in zwei Trapeze (12) teilt,
wobei das dem palettenartigen Unterbau (3) nähere Trapez (15) durch eine Diagonalleiste (19) in zwei Dreiecke (16) geteilt ist,
und das dem palettenartigen Unterbau (3) entferntere Trapez (17) eine zur mittigen Querleiste (11) im Wesentlichen parallele Querleiste (18) aufweist, und
wobei in einem Randbereich (20) im Inneren (24) der Vorrichtung (1) sowohl auf den mittigen Querleisten (11) als auch auf den dazu im Wesentlichen parallelen Querleisten (18) der Stirnseiten (6)jeweils eine Längsleiste (21) im Wesentlichen parallel zu einer Längsrichtung (22) des palettenartigen Unterbaus (3) derart angebracht ist, dass eine eingestellte, an beide Längsleisten (21) angelehnte plattenförmige Vorrichtung (2) im Wesentlichen 90° zu den Querleisten (11, 18) ausgerichtet ist.

2. Vorrichtung nach Anspruch 1, **dadurch gekennzeichnet, dass** im Inneren (24) der Vorrichtung (1) auf der mittigen Querleiste (11) zwei Längsleisten (21) in den Randbereichen (20) angebracht sind.

3. Vorrichtung nach einem der Ansprüche 1 bis 2, **dadurch gekennzeichnet, dass** im Wesentlichen in einer Mitte (23) der Langseite (7) ein Leistenrahmen (8) mit Querleisten (9) parallel zu den Leistenrahmen (8) an den Stirnseiten (6) angeordnet ist.

4. Vorrichtung nach einem der Ansprüche 1 bis 3, **dadurch gekennzeichnet, dass** eine oder jeweils eine plattenförmige Vorrichtung (2) an einer Längsleiste (21) im Inneren (24) der Vorrichtung (1) angeordnet ist, wobei die plattenförmigen Vorrichtungen (2) schräg angelehnt sind.

5. Vorrichtung nach einem der Ansprüche 1 bis 4, **dadurch gekennzeichnet, dass** an den Langseiten (7) Langleisten (25) vorgesehen sind, insbesondere in der Höhe (26) der Querleisten (9).

6. Vorrichtung nach einem der Ansprüche 1 bis 5, **dadurch gekennzeichnet, dass** der Aufbau (4) mit dem palettenartigen Unterbau (3) verbunden ist.

## Claims

1. Device (1) for transporting and/or storing fragile, plate-shaped devices (2), having a pallet-like substructure (3), comprising wood, and a structure (4), comprising wooden strips (5), the structure (4) having end faces (6) and long faces (7) corresponding to the pallet-like substructure (3), the end faces (6) each comprising a strip frame (8) with transverse strips (9), which in particular are attached to the strip frame (8) with nail plates (10), and a diagonal strip (19), **characterized in that** a central transverse strip (11) has a pitch (13) so that it essentially centrally divides the strip frame (8) transversely into two trapezoids (12), wherein the trapezium (15) closer to the pallet-like substructure (3) is divided into two triangles (16) by a diagonal strip (19), and the trapezium (17) further away from the pallet-like substructure (3) has a transverse strip (18) substantially parallel to the central transverse strip (11), and wherein, in an edge region (20) in the interior (24) of the device (1), both on the central transverse strips (11) and on the transverse strips (18) of the end faces (6) which are substantially parallel thereto, in each case one longitudinal strip (21) is mounted substantially parallel to a longitudinal direction (22) of the pallet-like substructure (3) in such a way that an adjusted plate-shaped device (2) leaning against both longitudinal strips (21) is aligned substantially 90° with respect to the transverse strips (11, 18).

2. Device according to claim 1, **characterized in that** two longitudinal strips (21) are fitted in the edge regions (20) in the interior (24) of the device (1) on the central transverse strip (11).

3. Device according to one of claims 1 to 2, **characterized in that** a strip frame (8) with transverse strips (9) parallel to the strip frames (8) is arranged at the end faces (6) essentially in a centre (23) of the long side (7).

4. Device according to one of claims 1 to 3, **characterized in that** one or in each case one plate-shaped device (2) is arranged on a longitudinal strip (21) in the interior (24) of the device (1), wherein the plate-shaped devices (2) are leaned obliquely.

5. Device according to one of claims 1 to 4, **characterized in that** longitudinal strips (25) are provided on the longitudinal sides (7), in particular at the height (26) of the transverse strips (9).

6. Device according to one of the claims 1 to 5, **characterized in that** the structure (4) is connected to the pallet-like substructure (3).

## Revendications

1. Dispositif (1) pour le transport et/ou le stockage de dispositifs fragiles en forme de plaques (2), comportant une sous-structure en forme de palette (3), constituée de bois, et une structure (4) constituée de lames en bois (5), la structure (4) présentant des faces frontales (6) et de longues faces (7) correspondant à la sous-structure en forme de palette (3), les faces d'extrémité (6) comprennent chacune un cadre de bande (8) avec des bandes transversales (9), qui sont notamment fixées au cadre de bande (8) avec des plaques à clous (10), et une bande diagonale (19), **caractérisé en ce qu'**une bande transversale centrale (11) présente un pas (13), de sorte que le cadre de bande (8) est divisé essentiellement au centre transversalement en deux trapézo des (12), dans laquelle le trapèze (15) le plus proche de la sous-structure en forme de palette (3) est divisé en deux triangles (16) par une bande diagonale (19), et le trapèze (17) le plus éloigné de la sous-structure en forme de palette (3) a une bande transversale (18) sensiblement parallèle à la bande transversale centrale (11), et dans laquelle, dans une zone de bord (20) à l'intérieur (24) du dispositif (1), tant sur les bandes transversales centrales (11) que sur les bandes transversales (18) des faces frontales (6) qui sont sensiblement parallèles à celles-ci, une bande longitudinale (21) est montée sensiblement parallèlement à une direction longitudinale (22) de la structure inférieure (3) en forme de palette, de telle manière qu'un dispositif (2) ajusté en forme de plaque reposant sur les bandes longitudinales (21) est orienté sensiblement 90° par rapport aux bandes transversales (11, 18).

2. Dispositif selon la revendication 1, **caractérisé en ce que** deux bandes longitudinales (21) sont montées dans les zones de bord (20) à l'intérieur (24) du dispositif (1) sur la bande transversale centrale (11).

3. Dispositif selon l'une des revendications 1 à 2, **caractérisé en ce qu'**un cadre de bande (8) avec des bandes transversales (9) parallèles aux cadres de bande (8) est disposé sur les faces frontales (6) essentiellement dans un centre (23) du côté long (7).

4. Dispositif selon l'une des revendications 1 à 3, **caractérisé en ce qu'**un ou plusieurs dispositifs en forme de plaque (2) sont disposés sur une bande longitudinale (21) à l'intérieur (24) du dispositif (1), les dispositifs en forme de plaque (2) étant inclinés en biais.

5. Dispositif selon l'une des revendications 1 à 4, **caractérisé en ce que** des bandes longitudinales (25) sont prévues sur les côtés longitudinaux (7), en particulier à la hauteur (26) des bandes transversales (9).

6. Dispositif selon l'une quelconque des revendications 1 à 5, **caractérisé en ce que** la structure (4) est reliée à la sous-structure en forme de palette (3).
